# DEMANDE DE BREVET EUROPEEN

(11) **EP 3 258 677 A1**
(43) Date de publication de la demande: **20.12.2017**
(21) Numéro de dépôt: 16305730.0
(22) Date de dépôt: 15.06.2016
(51) Int. Cl.: H04M 1/03, H04M 1/04, G10K 11/08, G10K 11/22

(54) **AMPLIFICATEUR ACOUSTIQUE AUTONOME**

(71) Demandeur: LUCY, 75008 Paris (FR)
(72) Inventeur: GRIVALLIERS, Christophe, 97228 SAINTE-LUCE MARTINIQUE (FR); JUILLARD, Béatrice, 92300 LEVALLOIS-PERRET (FR)
(74) Mandataire: Novagraaf Technologies

(57) **Abrégé**

L'invention concerne un amplificateur acoustique autonome 1 comprenant un logement 103 destiné à recevoir un émetteur de son d'un appareil électronique T. Selon l'invention, l'amplificateur 1 comprend une pyramide 10 creuse, ouverte à sa base 102 et déformable entre un état plié aplati de stockage et un état non-aplati déplié d'utilisation.

## Description

### Domaine de l'invention

L'invention concerne le domaine des amplificateurs acoustiques. Plus particulièrement, elle concerne des amplificateurs acoustiques, dits « autonomes », qui sont dépourvus de batteries ou de source d'énergie électrique. Ces amplificateurs autonomes sont configurés pour recevoir la partie émettant du son d'un appareil électronique, notamment un téléphone portable, en vue d'amplifier le son émis par cet appareil.

### Etat de la technique

Les amplificateurs acoustiques autonomes apparaissent de plus en plus nombreux sur le marché grâce à leur fonctionnement sans batteries ou autres sources d'énergie électrique. Ces amplificateurs sont donc portables et prêts à fonctionner à l'immédiat. Il suffit d'installer un émetteur de son sur ces amplificateurs et de le mettre en marche. Ainsi, un utilisateur obtient un meilleur confort dans l'écoute du son, ainsi amplifié, qui peut être de la musique ou des informations à la radio.

Il est connu, dans l'état de la technique, des amplificateurs acoustiques autonomes en forme d'un cylindre comportant une section rétrécie au milieu. Un logement est pratiqué sur cette section rétrécie pour recevoir un émetteur de son tel qu'un téléphone portable. Grâce à la forme évasée en partant de la section rétrécie vers les deux bases ouvertes et opposées du cylindre, le son émis du téléphone est propagé et amplifié.

Cependant, de tels amplificateurs présentent des dimensions importantes. Ils sont donc assez encombrants et peu pratiques pour les transporter et les utiliser dans un événement public.

De plus, pour des raisons esthétiques, ils sont souvent réalisés en bois. Vu la forme complexe de ces amplificateurs, leur procédé de fabrication, souvent par tournage, est long et coûteux.

### Objectifs de l'invention

L'invention a notamment pour objectif de pallier tout ou partie des inconvénients de l'art antérieur.

Un objectif de l'invention est de fournir un amplificateur dont la structure est peu encombrante, facilement transportable tout en assurant une bonne amplification du son.

Un autre objectif de l'invention est de proposer un amplificateur respectueux de l'environnement, peu coûteux et facile à réaliser.

### Description générale de l'invention

Avec ces objectifs en vue, l'invention propose un amplificateur acoustique autonome comprenant un logement destiné à recevoir un émetteur de son d'un appareil électronique.

Selon l'invention, l'amplificateur acoustique autonome comprend une pyramide creuse, ouverte à sa base et déformable entre un état plié aplati de stockage et un état non-aplati déplié d'utilisation.

On entend par pyramide la forme d'un volume pyramidal avec une base polygonale dont l'axe principal relie l'apex dudit volume à son image projeté perpendiculairement sur la base polygonale.

Ainsi, lorsque l'amplificateur est dans un état non-aplati déplié d'utilisation, il sert à propager et à augmenter l'intensité du son venant de l'émetteur. Par ailleurs, l'amplificateur est déformable en un état plié aplati de stockage. Il occupe donc moins de volume et il est peu encombrant, ce qui est pratique pour le mettre dans un sac et le transporter ou pour stocker un nombre important de ces amplificateurs.

Avantageusement, mais facultativement, l'amplificateur acoustique autonome selon l'invention présente au moins l'une des caractéristiques techniques suivantes additionnelles :
- la pyramide est délimitée par des parois latérales, dont une paroi latérale plancher agencée de sorte à être disposée en regard d'une surface de réception quelconque ;
- le logement est réalisé et positionné au voisinage d'un apex de la pyramide ;
- le logement est réalisé à travers une des parois latérales ;
- le logement comprend une fente s'étendant depuis un voisinage de l'apex en direction de la base de la pyramide ;
- l'amplificateur comprend un moyen de maintien de l'état non-aplati déplié d'utilisation de la pyramide ;
- l'amplificateur comprend des pieds s'étendant en saillie de la paroi latérale plancher au niveau de la base de la pyramide ;
- l'amplificateur est réalisé à partir d'un développé sectorisé comportant une succession de secteurs sensiblement triangulaires adjacents deux à deux et disposés en éventail, chaque secteur étant délimité par deux lignes de pli concourantes ;
- le développé sectorisé comprend un volet de liaison adjacent à un secteur d'extrémité de la succession des secteurs;
- le moyen maintien comporte une languette réalisée dans le prolongement d'un bord latéral du volet de liaison ;
- le développé est réalisé à partir d'une feuille de matériau ; et
- la feuille de matériau est réalisée en carton alvéolaire.

### Liste des figures

D'autres avantages et caractéristiques de l'invention apparaitront lors de la description ci-après d'un mode de réalisation. Aux dessins annexés :
- La figure 1 est une vue en perspective d'un premier mode de réalisation d'un amplificateur acoustique autonome selon l'invention dans un état déplié non-aplati d'utilisation;
- La figure 2 est une vue en perspective de l'amplificateur de la figure 1 recevant un téléphone portable ;
- Les figures 3 et 4 sont respectivement une vue de face et une vue d'arrière de l'amplificateur de la figure 1 ;
- La figure 5 est une vue de dessus d'un développé à partir duquel est réalisé l'amplificateur de la figure 1 ;
- Les figures 6 et 7 sont des vues d'arrière de l'amplificateur de la figure 1 comportant un moyen de maintien d'un état non-aplati déplié d'utilisation respectivement dans une position engagée et non-engagée ;
- Les figures 8 et 9 sont des vues en perspective de l'amplificateur de la figure 1 montrant son arrière et respectivement son côté droit et son côté gauche.
- Les figures 10 et 11 sont respectivement une vue de dessus et une vue de dessous de l'amplificateur de la figure 1 dans un état aplati plié de stockage ;
- La figure 12 est une vue en perspective de la figure 1 en cours de transformation d'un état aplati plié de stockage à un état non-aplati déplié d'utilisation sous une pression exercée par un utilisateur ;
- La figure 13 est un vue d'arrière de l'amplificateur de la figure 1 comportant un deuxième exemple de réalisation du moyen de maintien ;
- La figure 14 est une vue de dessus d'un développé à partir duquel est réalisé un deuxième mode de réalisation d'un amplificateur selon l'invention.

Dans la suite de la description, l'état aplati plié de stockage de l'amplificateur selon l'invention est appelé « l'état plié ». De même, l'état non-aplati déplié d'utilisation de l'amplificateur selon l'invention est appelé « l'état déplié ». En outre, l'amplificateur acoustique autonome selon l'invention sera appelé « l'amplificateur ».

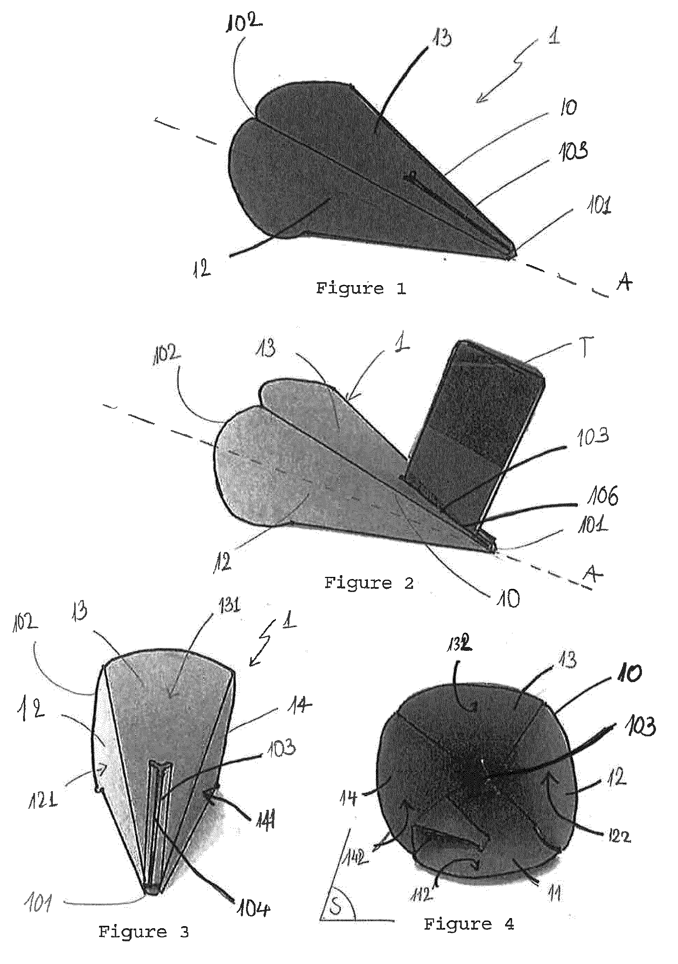

Nous entendons par « gauche » et « droite », la gauche et la droite respectivement de la figure 3 telle que représentée. Ainsi, le côté gauche de l'amplificateur est le côté situé à gauche de la figure 3 et le côté droit de l'amplificateur est le côté situé à droite de la figure 3.

### Description détaillée de l'invention

En référence à la figure 1 et à la figure 2, est illustrée une vue en perspective de l'amplificateur 1 dans un état déplié avec ou sans appareil électronique comportant un émetteur de son. Un tel appareil électronique peut être un téléphone portable, un baladeur numérique ou une tablette tactile. Dans la suite de la description, nous prenons comme exemple un téléphone portable T comprenant un haut-parleur formant émetteur de son pour illustrer l'appareil électronique.

L'amplificateur comprend une pyramide 10 creuse et ouverte à sa base 102. La pyramide 10 est délimitée par des parois latérales, dont deux 12 et 13 sont visibles sur les figures 1 et 2. Un axe principal A de la pyramide 10 relie l'apex 101 à son image projetée perpendiculairement à la base 102. Le son venant du haut-parleur du téléphone portable T est propagé et intensifié suivant l'axe principal A de la pyramide 10. Par conséquent, si une personne se trouve assez loin de l'axe principal A, elle entend moins bien le son amplifié. L'utilisation de l'amplificateur 1, surtout quand elle a lieu à l'extérieur, respecte donc des personnes qui souhaitent ne pas être dérangées.

En outre, l'amplificateur 1 comprend un logement 103 qui est destiné à recevoir le haut-parleur du téléphone portable T. Selon la figure 2, celui-ci, ainsi inséré dans l'amplificateur 1, est maintenu perpendiculaire à une ouverture 106 du logement 103. De plus, l'amplification du son est d'autant meilleure que le haut-parleur du téléphone portable T est proche de l'apex 101 de la pyramide 10.

La figure 3 montre l'extérieur et donc une face externe 121, 131, 141 des parois latérales 12, 13 et 14 de l'amplificateur 1. Le logement 103 est, ici, une fente 104 s'étendant depuis un voisinage de l'apex 101 en direction de la base 102 de la pyramide 10. Dans cet exemple, la fente 104 s'étend depuis l'apex 101 en direction de la base 102. Dans un autre exemple de réalisation, la fente 104 peut être légèrement distante de l'apex 101 en restant proche de celui-ci. La fente 104 est pratiquée à travers l'une parmi les parois latérales. La longueur et la largeur de la fente 104 sont adaptées à la dimension du téléphone portable T. Bien entendu, la fente 104 peut être adaptée à d'autres types d'appareil électronique tels qu'une tablette tactile ou un baladeur numérique.

Dans un exemple de réalisation, la face externe de chacune des parois est pelliculée, c'est-à-dire, revêtue d'une couche mince de matériau. Celle-ci peut, par exemple, présenter des chiffres, des lettres ou des dessins faisant partie d'un message publicitaire. Cela peut être réalisé par une impression en quadrichromie par exemple sur un vernis ou un couché. L'impression peut être recouverte de différents matériaux, tels que du cuir, d'un tissu, d'une matière imperméable, plastique, etc.

Eventuellement, les parois latérales 11, 12, 13, 14 peuvent présenter des reliefs faisant saillie vers l'extérieur à partir de la face externe de celles-ci.

La figure 4 montre l'arrière et l'intérieur de l'amplificateur 1. L'amplificateur 1 comprend la pyramide 10, ici, à quatre parois latérales 11, 12, 13 et 14 dont une paroi latérale plancher 11 qui est agencée de sorte à être disposée en regard d'une surface de réception S quelconque, par exemple sur une table, un banc ou un balcon ou encore le sol. D'autre part, chacune des parois latérales 11, 12, 13, 14 présente une face interne 112, 122, 132, 142 respectivement.

Dans cet exemple, la paroi latérale plancher 11 est en regard de la paroi latérale 13 comportant le logement 103. Bien entendu, le logement 103 peut être pratiqué à une autre paroi latérale tant que celle-ci n'est pas la paroi latérale plancher 11.

En variante de réalisation, l'amplificateur peut comprendre un voile venant couvrir sa base ouverte. Ce voile est réalisé en une matière poreuse laissant passer le son tout en réduisant d'éventuels parasites de celui-ci. Ainsi, la qualité du son amplifié est améliorée. Le voile peut porter des couleurs et des signes distinctifs pour embellir l'amplificateur.

Dans un autre exemple, la face interne de chaque paroi latérale est revêtue d'une couche de matériau supplémentaire. Elle peut être réalisée d'un matériau permettant une meilleure propagation du son à l'intérieur de l'amplificateur. Par exemple, la couche de matériau peut être une couche métallique ou une couche en verre.

Dans un autre exemple, une ouverture peut être pratiquée sur une des parois latérales pour laisser passer un câble de chargement. Celui-ci a pour but d'alimenter, dans l'exemple illustré, le téléphone portable T au cours de son utilisation. En particulier, l'ouverture peut être réalisée à la paroi latérale plancher 11.

Dans un autre exemple de réalisation, les parois latérales de l'amplificateur sont agencées de sorte à recevoir des sources lumineuses sur leur face interne et/ou sur leur face externe afin d'en faire un objet lumineux. Les sources lumineuses sont par exemple les DELs (*diode électroluminescente* ou *light emtting diode-LED* en anglais) à basse consommation d'énergie.

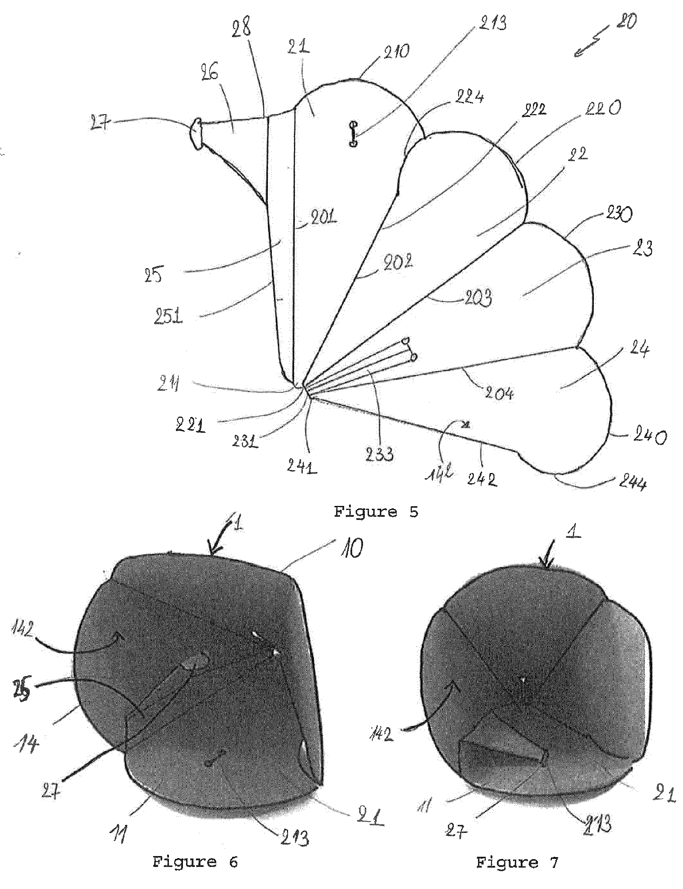

La figure 5 représente un développé sectorisé 20 à partir duquel est réalisé l'amplificateur 1. Le développé sectorisé 20 comporte quatre secteurs 21, 22, 23, 24. Deux secteurs adjacents l'un à l'autre sont délimités par une ligne de pli 201, 202, 203 ou 204. Les lignes de pli sont réalisées, par exemple, par rainage ou par découpe partielle d'une épaisseur du développé sectorisé 20.

Le développé sectorisé 20 présente ainsi une succession de secteurs sensiblement triangulaires adjacents deux à deux et disposés en éventail. Chaque secteur 21, 22, 23, 24 est donc globalement un triangle comportant un sommet 211, 221, 231, 241, et une base 210, 220, 230, 240, opposée au sommet. Dans l'exemple illustré ici, la base 210, 220, 230, 240 de tous les secteurs ont une forme arrondie.

Un premier 22 et un deuxième 23 secteurs intermédiaires se trouvent entre un premier 21 et un deuxième 24 secteurs d'extrémité. Par définition, les secteurs d'extrémité sont le premier et le dernier secteur de la succession des secteurs.

Dans cet exemple, le développé sectorisé 20 comprend également un volet de liaison 25 adjacent au premier secteur d'extrémité 21. Il a pour but de joindre les deux secteurs d'extrémité 21, 24 ensembles lors d'un montage de l'amplificateur 1. Par ailleurs, une languette 27 est réalisée dans le prolongement 26 d'un bord latéral 251 du volet de liaison 25. La languette 27 est, ici, configurée de sorte à être engagée dans une rainure 213 ménagée dans le premier secteur d'extrémité 21 lorsque l'amplificateur 1 est dans l'état déplié.

En outre, le deuxième secteur intermédiaire 23, situé entre le premier secteur intermédiaire 22 et le deuxième secteur d'extrémité 24, comporte une découpe 233 correspondant au logement 103 de l'amplificateur 1.

Il est à noter que, dans l'exemple ici illustré, le deuxième secteur d'extrémité 24 est découpé de sorte que son bord latéral libre 242 présente une extension arrondie 244 en saillie depuis ledit bord 242 et au voisinage de la base 240. De même, le premier secteur intermédiaire 22 présente, ici, une extension arrondie 224 s'étendant en saillie depuis un bord latéral commun 222 avec le premier secteur d'extrémité 21. Le bord latéral commun 222 est défini par la ligne de pli 202 situé entre celui-ci et le premier secteur d'extrémité 21.

Par ailleurs, le développé sectorisé 20 est réalisé à partir d'une feuille de matériau 28. Par exemple, le matériau peut être du carton alvéolaire à une ou plusieurs couches d'alvéole, carton plein, carton bois ou carton gris. En variante, le matériau peut être en matériau composite comportant des couches de fibres imprégnées dans une matrice, des fibres de chaque couche étant orientées différemment. En variante, le matériau est un matériau métallique. Par exemple le matériau peut être au moins l'un parmi le PVC, un plastique, un miroir, le verre, le titane, les fibres de carbone, l'aluminium brossé, etc...

En particulier, le développé sectorisé 20 est réalisé d'une feuille de carton qui est recyclable ou certifié « PEFC » (pour « Program for the Endorsment of Forest Certification » concernant la gestion durable de la forêt). Ainsi, l'amplificateur 1 peut donc être recyclé à la fin de vie pour une nouvelle utilisation, ce qui est économique et écologique.

Les figures 6 et 7 sont des vues d'arrière de l'amplificateur réalisé à partir du développé de la figure 5. Dans ces deux figures, le volet de liaison 25 est fixé par collage contre la face interne 142 du deuxième secteur d'extrémité 24 pour réaliser la pyramide 10 de l'amplificateur 1. Ainsi, le premier secteur d'extrémité 21, dans l'exemple illustré, forme la paroi latérale plancher 11. Le collage du volet de liaison 25 contre la face interne 142 peut être direct ou bien réalisée à l'aide d'une bande autocollante simple ou double face.

La pyramide 10 avec la languette 27 libre, telle qu'illustrée à la figure 6, permet de déformer l'amplificateur à l'état plié. A la figure 7, la languette 27 est insérée dans la rainure 213. Elle permet de maintenir l'amplificateur dans son état déplié. Autrement dit, la languette 27, ainsi engagée, est un moyen de maintien de l'état déplié de la pyramide 10. En variante de réalisation, la languette 27 s'étend selon toute une diagonale de la section polygonale dans laquelle s'étend la languette 27 pour se stabiliser « naturellement » dans un angle opposé à un point de naissance de la languette 27.

Dans un autre exemple de réalisation, la languette 27 peut comporter une pastille adhésive adaptée pour être collée à la face interne de la paroi latérale plancher en lieu et place de la rainure 213. En variante, la pastille de languette peut être une pastille auto-agrippante de type Velcro®.

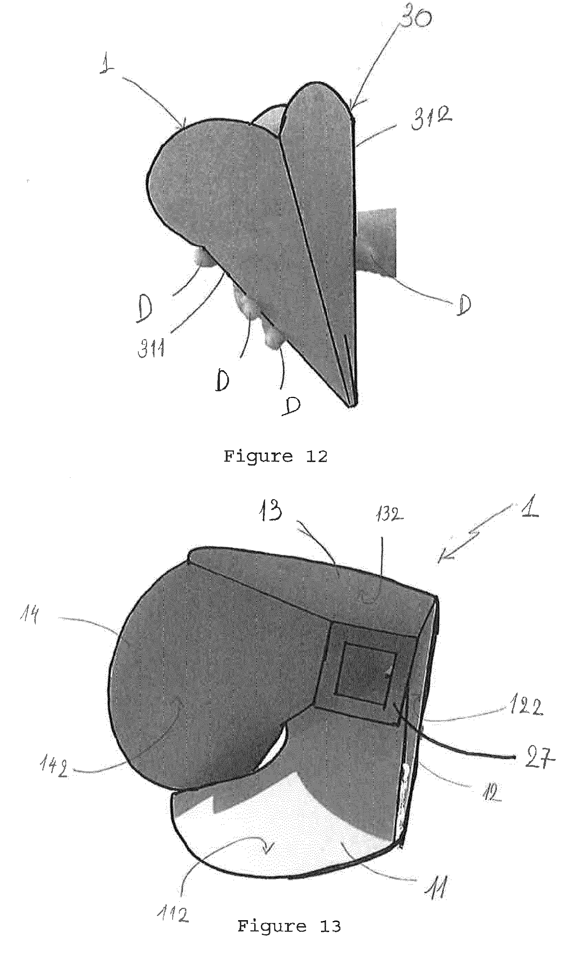

Il est possible de réaliser d'autres moyens de maintien de l'état déplié de la pyramide tels que deux languettes situées à l'extérieur et non pas à l'intérieur de la pyramide ou une cale ayant une forme propre au mode de réalisation de l'amplificateur et venant épouser des faces internes des parois latérales. Une telle cale 29 est illustrée à figure 13. Elle a, ici, une forme carrée. Elle est disposée à l'intérieur de l'amplificateur 1 et contrecollée sur les faces internes 112, 122, 132 et 142 des parois latérales 11, 12, 13 et 14.

En variante de réalisation, cette cale 29 peut être une pièce extérieure contrecollée à l'intérieur de l'amplificateur ou une pièce intégrée dans le découpage du développé, venant de matière avec celui-ci, et qui vient se fixer par simple pression à l'intérieur de la pyramide 10.

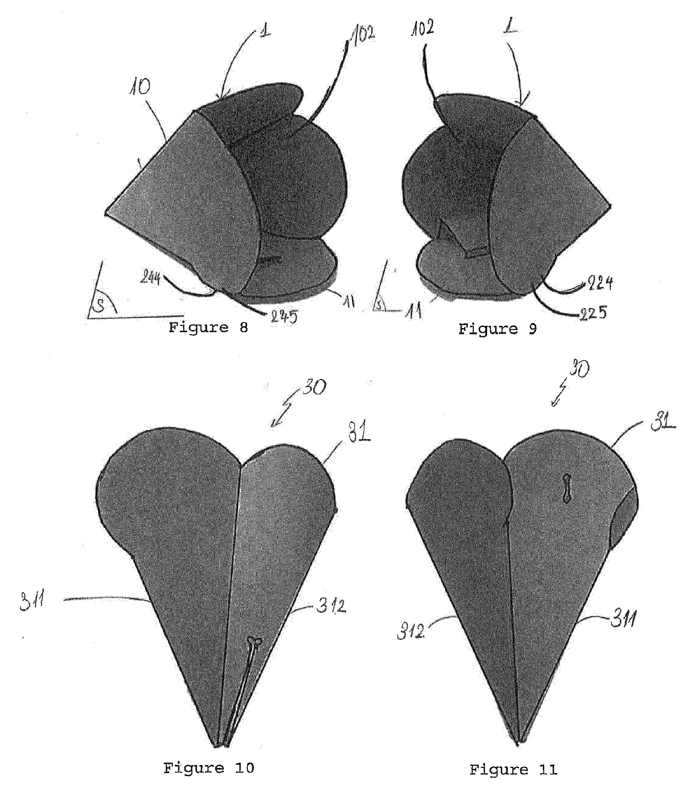

En référence aux figures 8 et 9, les extensions arrondies 224, 244, dans l'état déplié de la pyramide 10, deviennent des pieds 225, 245 s'étendant en saillie de la paroi latérale plancher 11 au niveau de la base 102 de la pyramide 10. Elles sont symétriques en miroir l'une par rapport à l'autre. Ainsi, une partie de la paroi latérale plancher 11 est surélevée et n'est plus en contact avec la surface de réception S au niveau de la base 102 de la pyramide 10. Les pieds 225, 245 consistent à stabiliser l'amplificateur une fois posé sur la surface de réception S. L'amplificateur 1 est maintenu d'autant plus stable que les dimensions des extensions arrondies 224, 244 sont importantes.

En référence à la figure 10 et à la figure 11, l'amplificateur 1 est en état plié. Il présente une forme aplatie 30 à deux dimensions. En raison de la base arrondie 210, 220, 230, 240 des secteurs du développé 20 et des extensions arrondies 224, 244 décrites ci-dessus, l'état plié aplati de stockage de l'amplificateur 1 présente, ici, une forme en coeur 31, ce qui donne une apparence esthétique à celui-ci. La forme en coeur 31 est délimitée par deux tranches périphériques 311, 322.

La figure 12 montre comment passer de l'état plié à l'état déplié de la pyramide. Il suffit d'appuyer sur deux tranches périphériques 311, 312 de l'amplificateur 1 en état plié à l'aide des doigts D d'une seule main. L'amplificateur 1 se déploie jusqu'à s'apparenter à la pyramide 10. Ainsi, la déformation de l'amplificateur 1 est facile et simple à réaliser.

Nous allons maintenant décrire un montage de l'amplificateur 1 qui vient d'être décrit en détail.

Tout d'abord, il faut fournir un développé sectorisé 20 à partir d'une feuille de matériau. Ce développé 20 est obtenu par découpage de la feuille, par formation des lignes de pli, par perçage du logement 103 en réalisant la découpe 233 et de la rainure 213. Nous avons, ici, le développé tel qu'illustré à la figure 5.

Ensuite, le développé sectorisé 20 est plié selon chacune des lignes de pli 201, 202, 203, 204 de manière à accentuer lesdites lignes et à définir clairement les secteurs 21, 22, 23, 24, le volet de liaison 25 et le prolongement 26.

Puis, un adhésif comme une bande autocollante simple ou double face est appliqué sur le volet de liaison 25 et qui est ensuite rapporté à la face interne 142 du deuxième secteur d'extrémité 24. L'adhésif peut être une couche de colle permettant un contre collage.

Finalement, la languette 27 du prolongement 26 est engagée dans la rainure 213 du premier secteur d'extrémité 21 pour maintenir l'état non-aplati déplié de l'amplificateur 1 ou, en variante, la languette 27 s'étend selon une diagonale de la section polygonale dans laquelle s'étend la languette 27 pour se stabiliser « naturellement » dans un angle opposé à un point de naissance de la languette 27.

Ainsi, le procédé de montage de l'amplificateur tel que décrit est simple et facile à réaliser.

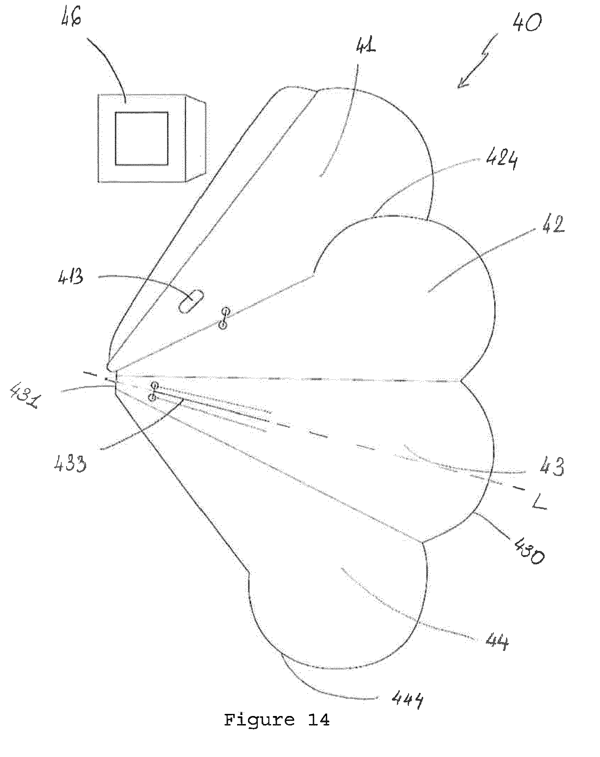

La figure 14 illustre un développé sectorisé 40 d'un deuxième mode de réalisation de l'amplificateur selon l'invention. Le développé sectorisé 40 présente une succession de secteurs, ici au nombre de quatre, 41, 42, 43 et 44 sensiblement triangulaires adjacents deux à deux et disposés en éventail. Un premier 42 et un deuxième 43 secteurs intermédiaires se trouvent entre un premier 41 et un deuxième 44 secteurs d'extrémité. Le premier secteur d'extrémité 41 forme une paroi latérale plancher destinée à être disposée en regard d'une surface de réception (S) quelconque, une fois l'amplificateur en position dépliée.

Le développé sectorisé 40 comprend également des extensions arrondies 424 et 444 permettant de maintenir l'amplificateur dans une position stable lorsqu'il est en état déplié.

Le développé sectorisé 40, illustré à la figure 14, comporte une découpe 433 dans le deuxième secteur intermédiaire 43. Cette découpe 433 correspond à un logement pour un téléphone portable et elle s'étend selon un axe L reliant le sommet 431 à la base 430 du deuxième secteur intermédiaire 43. Cependant, dans le mode de réalisation illustré, la découpe 433 est à distance du sommet 431 de sorte que le logement, formé à partir de cette découpe, reste légèrement en retrait de l'apex de l'amplificateur dans l'état déplié.

Le développé sectorisé 40 comprend en outre une ouverture 413 réalisée à travers le premier secteur d'extrémité 41. L'ouverture 413 est, ici, configurée pour laisser passer un câble de chargement ou d'alimentation du téléphone portable T. Ainsi, l'ouverture 413 se trouve en regard du logement quand l'amplificateur est dans l'état déplié.

La figure 14 illustre également un moyen de maintien de l'état déplié de l'amplificateur. Dans le mode de réalisation illustré, le moyen de maintien est une pièce détachée du développé sectorisé 40. Il s'agit, ici, d'une pièce 46 en forme de carré et complémentaire de la base de l'amplificateur dans l'état déplié. La pièce 46 est à peu près identique à la cale 29 illustrée à la figure 13. La pièce 46 vient épouser des faces internes des parois latérales lorsqu'elle est insérée à l'intérieur de l'amplificateur. Il suffit d'appliquer une simple pression sur le pièce 46, ainsi insérée, pour maintenir ladite pièce avec l'amplificateur.

Bien entendu, il est possible d'apporter à l'invention de nombreuses modifications sans pour autant sortir du cadre de celle-ci. Par exemple, la forme pliée de stockage et/ou déplié d'utilisation peut s'adapter au besoin du marché et des demandes des clients (vélo pour un tour de France, guitare pour un festival de musique, etc., ou encore un coeur à l'état plié de stockage ici illustré). D'autre part, la taille de l'amplificateur selon l'invention peut varier jusqu'à une forme « géante » pour en faire en plus de son utilité d'amplification du son un objet de décoration et de design (appliques, chaises longues, tabouret, lampes, oeuvres d'art, etc.).

Dans un autre exemple, l'amplificateur peut comprendre un système supplémentaire agencé de sorte à pouvoir contenir des aliments tels que des frites, des bonbons, etc. Ce système peut être sous forme pyramidale, complémentaire de la forme de l'amplificateur, venant s'encastrer dans l'amplificateur. En alternative, ce système peut avoir une forme à deux dimensions correspondant à la section de la base 102 de l'amplificateur.

Dans un autre exemple, il est prévu un logement supplémentaire dans lequel est installé un sifflet. En pratique, le logement supplémentaire est disposé proche de l'apex de l'amplificateur. Ainsi, le sifflet est disposé dans ce logement de sorte qu'une fois soufflé, le son venant du sifflet est amplifié par l'amplificateur selon l'invention.

## Revendications

1. Amplificateur acoustique autonome (1) comprenant un logement (103) destiné à recevoir un émetteur de son d'un appareil électronique (T), ledit amplificateur (1) étant **caractérisé en ce qu'**il comprend une pyramide (10) creuse, ouverte à sa base (102) et déformable entre un état plié aplati de stockage et un état non-aplati déplié d'utilisation.

2. Amplificateur selon la revendication 1 **caractérisé en ce que** la pyramide (10) est délimitée par des parois latérales (11, 12, 13, 14), dont une paroi latérale plancher (11) agencée de sorte à être disposée en regard d'une surface de réception (S) quelconque.

3. Amplificateur selon la revendication 1 ou la revendication 2, **caractérisé en ce que** le logement (103) est réalisé et positionné au voisinage d'un apex (101) de la pyramide (10).

4. Amplificateur selon l'une des revendications 1 à 3 **caractérisé en ce que** le logement (103) est réalisé à travers une des parois latérales (13).

5. Amplificateur selon l'une des revendications 1 à 4 **caractérisé en ce que** le logement (103) comprend une fente (104) s'étendant depuis un voisinage de l'apex (101) en direction de la base (102) de la pyramide (10).

6. Amplificateur selon l'une des revendications 1 à 5 **caractérisé en ce qu'**il comprend un moyen de maintien (27, 46) de l'état non-aplati déplié d'utilisation de la pyramide (10).

7. Amplificateur selon l'une des revendications 1 à 6 **caractérisé en ce qu'**il comprend des pieds (225, 245) s'étendant en saillie de la paroi latérale plancher (11) au niveau de la base (102) de la pyramide (10).

8. Amplificateur acoustique selon l'une des revendications 1 à 7 **caractérisé en ce que** l'amplificateur (1) est réalisé à partir d'un développé sectorisé (20 ; 40) comportant une succession de secteurs (21, 22, 23, 24 ; 41, 42, 43, 44) sensiblement triangulaires adjacents deux à deux et disposé en éventail, chaque secteur (21, 22, 23, 24; 41, 42, 43, 44) étant délimité par deux lignes de pli (201, 202, 203, 204) concourantes.

9. Amplificateur acoustique selon la revendication 8 **caractérisé en ce que** le développé sectorisé (20) comprend un volet de liaison (25) adjacent à un secteur d'extrémité (21) de la succession de secteurs.

10. Amplificateur acoustique selon la revendication 9, **caractérisé en ce que** le moyen maintien comporte une languette (27) réalisée dans le prolongement (26) d'un bord latéral (251) du volet de liaison (25).

11. Amplificateur selon les revendications précédentes **caractérisé en ce que** le développé sectorisé (20) est réalisé à partir d'une feuille de matériau (28).

12. Amplificateur selon la revendication 11 **caractérisé en ce que** la feuille de matériau (28) est réalisée en carton alvéolaire ou en carton plein
